Europäisches Patentamt

European Patent Office

Office européen des brevets

(19)

(11) Numéro de publication: **0 226 838**
**B1**

(12) **FASCICULE DE BREVET EUROPEEN**

(45) Date de publication du fascicule du brevet:
**17.01.90**

(51) Int. Cl.⁴: **B61B 12/10**

(21) Numéro de dépôt: **86116258.4**

(22) Date de dépôt: **26.09.84**

(60) Numéro de publication de la demande initiale en application de l'article 76 CBE: **0140756**

(54) **Dispositif d'entraînement des câbles d'une Installation de transport à cables aériens.**

(30) Priorité: **03.10.83 FR 8315838**

(43) Date de publication de la demande:
**01.07.87 Bulletin 87/27**

(45) Mention de la délivrance du brevet:
**17.01.90 Bulletin 90/3**

(84) Etats contractants désignés:
**AT CH DE IT LI SE**

(56) Documents cités:
**EP-A- 0 015 211**
**DE-A- 2 518 753**
**DE-C- 441 183**
**DE-C- 517 409**
**DE-C- 630 022**
**FR-A- 2 448 464**
**GB-A- 1 370 181**
**US-A- 3 788 606**

(73) Titulaire: **Creissels, Denis, 43, Bld. des Alpes, F-38240 Meylan(FR)**

(72) Inventeur: **Creissels, Denis, 43, Bld. des Alpes, F-38240 Meylan(FR)**

(74) Mandataire: **Kern, Paul, 206, Cours de la Libération, F-38100 Grenoble(FR)**

## Description

L'invention est relative à un dispositif d'entraînement des cables d'une installation de transport a cables aeriens selon le préambule de la revendication 1. Un tel dispositif est connu par exemple du DE-C 517 409.

Le but de la présente invention est de permettre la réalisation d'un dispositif simple de maintien du synchronisme des deux câbles pendant les périodes transitoires de démarrage, de freinage et de changement de vitesse pour éviter toute mise en travers des véhicules accouplés aux câbles et ce but est atteint par le dispositif d'entraînement selon la revendication 1.

Les temps de freinage sont relativement courts et les différences de déplacement des deux câbles pendant cette courte période sont limitées et insuffisantes pour une mise en travers des véhicules si les poulies d'entraînement tournent en synchronisme.

Selon un développement de l'invention, un embrayage à commande électrique relie les arbres grande vitesse des deux réducteurs et cette liaison mécanique impose une rotation synchrone des poulies indépendamment des forces de freinage exercées sur les poulies ou sur toute autre partie du dispositif d'entraînement. L'embrayage est commandé simultanément au freinage normal ou de secours de façon à accoupler les poulies dès le début du freinage, cette commande étant avantageusement électrique, mais pouvant être réalisée mécaniquement ou hydrauliquement.

Le dispositif d'accouplement peut également être utilisé pour la mise en route de l'installation où les différences de résistance de frottement des deux boucles de câbles peuvent dépasser les possibilités de compensation du différentiel électrique. Dans ce cas ce dernier n'est mis en action qu'au moment du lancement des véhicules sur la ligne.

D'autres avantages et caractéristiques ressortiront plus clairement de la description qui va suivre d'un mode de mise en oeuvre de l'invention, donné à titre d'exemple non limitatif et représenté au dessin annexé, dans lequel :

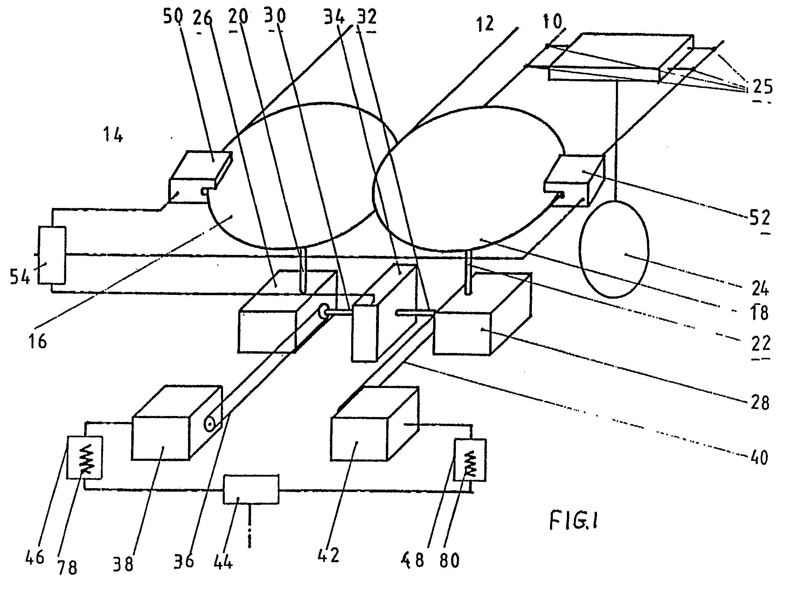

- la figure 1 est une vue schématique en perspective d'un dispositif d'entraînement selon l'invention.

Sur les figures, deux boucles de câbles porteurs-tracteurs 10, 12 d'une télécabine s'étendent en circuit fermé entre deux stations dont seule la station motrice 14 est représentée, en passant dans les stations sur des poulies 16, 18 d'extrémités à axe vertical 20, 22. Les poulies d'extrémités 16, 18 de la station 14 sont des poulies motrices entraînant les câbles 10, 12 en continu à une même vitesse. Chaque véhicule 24 est accouplé par des pinces 25 aux deux câbles 10, 12 en ligne, plusieurs véhicules 24 pouvant se succéder ou être échelonnés le long des câbles 10, 12. A l'entrée d'une station les véhicules 24 sont désaccouplés des câbles 10, 12 et pris en charge par des rails de transfert passant devant des quais de débarquement et d'embarquement (non représentés). Les passagers montent et descendent des véhicules 24 à l'arrêt ou circulant à faible vitesse et à la sortie de la station les véhicules 24 sont accélérés par tout moyen approprié avant d'être réaccouplés aux câbles 10, 12 sur la voie opposée. Ce fonctionnement des télécabines est bien connu des spécialistes.

Les câbles 10, 12 porteurs-tracteurs sont parallèles et à un même niveau en ligne, leur écartement constant étant voisin de 75 cm.

Les axes 20, 22 des poulies motrices 16, 18 sont les arbres petite vitesse de réducteurs 26, 28 dont les arbres grande vitesse 30, 32 sont alignés et reliés mécaniquement par un embrayage 34. L'arbre 30 est relié par une transmission à courroie 36 à un moteur électrique 38 tandis que l'arbre 32 est relié par une transmission à courroie 40 à un moteur électrique 42. Les deux chaînes cinématiques sont identiques, l'ensemble étant parfaitement symétrique. Les deux moteurs 38, 42 sont alimentés par une même source de courant 44 par l'intermédiaire de blocs de commande 46, 48 agencés pour équilibrer en permanence les puissances fournies. Un tel système de commande est décrit en détail dans la demande de brevet original.

Un système de freinage mécanique, schématiquement représenté par un étrier de freinage 50 enserrant la poulie 16 et un étrier de freinage 52 enserrant la poulie 18 est piloté par un bloc de commande 54. Les freins peuvent bien entendu être d'un type différent et coopérer avec d'autres parties du dispositif d'entraînement. Le bloc 54 commande également l'embrayage 34, de façon à accoupler rigidement les arbres grande vitesse 30, 32 dès le freinage des poulies 16, 18. L'embrayage 34 peut être du type électrique ou de tout autre type approprié.

Le dispositif d'entraînement selon l'invention fonctionne de la manière suivante :

En fonctionnement normal, l'embrayage 34 est débrayé et les freins 50, 52 desserrés. Le moteur 38 entraîne la poulie 16 et le moteur 40 la poulie 18. Les véhicules 24 accouplés aux câbles d'entraînement 10, 12 constituent une liaison entre ces câbles 10, 12. Si la force de traction des véhicules 24 est répartie entre les câbles 10, 12 les moteurs 38, 42 fournissent aux poulies 16, 18 la même puissance, les courants $I_1$, $I_2$, dans leurs circuits d'induit étant égaux. Etant alimentés par la même source de courant 44 à travers des résistances identiques 78, 80 leur tension d'induit $V_1$, $V_2$ sont égales et par là même leur vitesse de rotation. Les câbles 10, 12 se déplacent en synchronisme parfait. Leur vitesse peut être réglée par tout moyen approprié.

Si l'un des câbles, par exemple le câble 12 prend un léger retard, ce retard pouvant résulter d'une plus grande longueur ou d'un glissement sur la poulie d'entraînement, le câble 10 en avance assurera une plus grande part de l'effort de traction et le courant d'induit $I_1$ augmente en conséquence.

Le système de commande (46, 48) diminue la vitesse du moteur 38 jusqu'au rétablissement de l'équilibre des puissances fournies aux câbles 10, 12. Cette autorégulation est simple et fiable et elle est indépendante de la charge de l'installation ou de la vitesse de fonctionnement. Le bon fonctionnement peut être contrôlé à l'aide d'instruments de mesure.

Lors d'un freinage de service ou d'urgence il est quasi-impossible d'assurer un freinage sensiblement égal sur les deux boucles 10, 12 et la disproportion des forces de freinage risque de dépasser les possibilités de réglage du dispositif précité. Ceci est également le cas lorsque le freinage provoque l'ouverture du contacteur d'alimentation des moteurs. Selon l'invention, l'ordre de freinage émis par le bloc 54 est transmis à l'embrayage 34 qui accouple les arbres 30, 32. A partir de cet instant les poulies 16, 18 tournent en synchronisme et entraînent les câbles 10, 12 à la même vitesse. La compensation d'un retard de l'un des câbles n'est plus assurée mais les écarts restent faibles pendant la durée de freinage et sont admissibles.

Après une longue période d'arrêt, par exemple en début de journée, les résistances de friction des câbles 10, 12 dues notamment au givre et à la glace peuvent être fort différentes. Pendant la période de mise en route, où l'installation fonctionne sans véhicules en ligne, l'embrayage 34 est embrayé pour un déplacement synchrone des câbles 10, 12. Après débrayage l'installation est prête pour le lancement des véhicules en ligne. L'embrayage 34 peut également être commandé par tout dispositif de sécurité détectant un déséquilibre important entre les deux boucles 10, 12, cette commande s'accompagnant généralement d'un freinage d'urgence.

## Revendications

1. Dispositif d'entraînement d'une installation de transport à deux boucles sans fin de câbles aériens (10, 12), chaque boucle passant dans les stations d'extrémités (14) sur une poulie de renvoi (16, 18), les deux poulies (16, 18) de l'une des stations étant entraînées en rotation chacune par un moteur électrique (38, 42) et chaque véhicule (24) étant accouplé en ligne à l'une desdites boules et dont l'autre des câbles appartient à l'autre desdites boucles, un dispositif de régulation de l'alimentation desdits moteurs électriques maintenant égale la puissance fournie par chaque moteur à la boucle associée par l'intermédiaire d'un réducteur de vitesse (26,28), caractérisé en ce qu'il comporte un dispositif (34) d'accouplement mécanique débrayable des arbres grande vitesse (30, 32) desdits réducteurs permettant d'accoupler et d'imposer une rotation synchrone des deux poulies d'entraînement (16, 18) en position embrayée du dispositif d'accouplement.

2. Dispositif d'entraînement selon la revendication 1, ayant une commande de freinage (54) desdits câbles aériens, caractérisé en ce que ladite commande de freinage est agencée pour commander lors d'un freinage ledit dispositif d'accouplement (34) pour acccoupler les deux arbres grande vitesse (30, 32).

3. Dispositif d'entraînement selon la revendication 1 ou 2, caractérisé en ce que ledit dispositif d'accouplement (34) comprend un embrayage à commande électrique reliant lesdits arbres grande vitesse (30, 32).

## Patentansprüche

1. Antriebsvorrichtung einer Transportanlage mit zwei endlosen Luftseilschleifen (10, 12), wobei jede Schleife in der Endstation (14) um eine Zurückführscheibe (16, 18) läuft und wobei die zwei Scheiben (16, 18) einer Station durch je einen Elektromotor (38, 42) in Drehung angetrieben werden und jedes Fahrzeug (24) auf der Bahn an ein Paar von parallelen Seilen gekuppelt ist, von denen ein Seil zu einer der genannten Schleifen gehört, und das andere zu der anderen der genannten Schleifen gehört, wobei eine Steuervorrichtung der Speisung der genannten Elektromotoren die von jedem Motor mittels eines Geschwindigkeitsuntersetzungsgetriebes (26, 28) an die dazugehörige Schleife gelieferte Leistung gleichbleibend hält, dadurch gekennzeichnet, dass sie eine lösbare mechanische Entkupplungsvorrichtung (34) der schnellen Wellen (30, 32) der genannten Untersetzungsgetriebe aufweist, welche die Kupplung ermöglicht und die synchrone Rotation der beiden Antriebsscheiben (16, 18) in eingeschalteter Loge der Kupplungsvorrichtung erzwingt.

2. Antriebsvorrichtung nach Anspruch 1, mit einer Bremssteuerung (54) der genannten Luftseile, dadurch gekennzeichnet, dass die genannte Bremssteuerung so ausgebildet ist, um bei einer Bremsung die genannte Kupplungsvorrichtung (34) zum Kuppeln der beiden schnellen Wellen (30, 32) zu steuern.

3. Antriebsvorrichtung nach Anspruch 1 oder 2, dadurch gekennzeichnet, dass die genannte Kupplungsvorrichtung (34) eine die beiden genannten schnellen Wellen (30, 32) verbindende elektrische Kupplung aufweist.

## Claims

1. Drive system of a transport installation with two closed loops of overhead cables (10, 12), each loop passing in the end station (14) over an end pulley (16, 18), the two pulleys (16, 18) of one station each being driven in rotation by an electric motor (38, 42), and each carriage (24) being coupled in line to a pair of parallel cables (10, 12) one of which belongs to one of said loops and the other one belonging to the other of said loops, a power supply control device of said electric motors maintaining equal the power supplied to the associated loop by each motor by means of speed reducing gear (26, 28), characterized in that it comprises detachable mechanical clutch means (34) for the high speed shafts (30, 32) of said reducing gears and to provide rotation at the same speed of the two drive pulleys (16, 18) when the clutch means is in the coupled position.

2. Drive system according to claim 1, having braking control means (54) of said overhead cables, characterized in that said braking control means is deviced to control said clutch means (34) for coupling the two high speed shafts (30, 32) when the braking is operated.

3. Drive system according to claim 1 or 2, characterized in that said clutch means (34) comprises an electrically controlled clutch coupling said high speed shafts (30, 32).

FIG.1